# EUROPÄISCHE PATENTSCHRIFT

(11) **EP 3 479 065 B1**
(45) Veröffentlichungstag und Bekanntmachung des Hinweises auf die Patenterteilung: **25.12.2019**
(21) Anmeldenummer: 18755786.3
(22) Anmeldetag: 13.08.2018
(51) Int. Cl.: G01C 21/30, G05D 1/02, G08G 1/042

(54) **VERFAHREN ZUR ERMITTLUNG EINER POSITIONSINFORMATION EINES KRAFTFAHRZEUGS UND KRAFTFAHRZEUG**
METHOD FOR DETERMINING POSITION INFORMATION OF A MOTOR VEHICLE, AND MOTOR VEHICLE
PROCÉDÉ DE DÉTERMINATION D'UNE INFORMATION DE POSITION D'UN VÉHICULE AUTOMOBILE ET VÉHICULE AUTOMOBILE

(30) Priorität: 11.09.2017 DE 102017215932
(43) Veröffentlichungstag der Anmeldung: 08.05.2019
(73) Patentinhaber: Audi AG, 85049 Ingolstadt (DE)
(72) Erfinder: SCHMITT, Nicholas, 85049 Ingolstadt (DE); PEER, Reinhard, 85080 Gaimersheim (DE)
(86) Internationale Anmeldenummer: PCT/EP2018/071916
(87) Internationale Veröffentlichungsnummer: WO 2019/048188

(56) Entgegenhaltungen:
- EP-A2- 2 416 303
- EP-A2- 2 416 303
- DE-A1- 2 064 811
- DE-A1-102016 007 733
- DE-A1-102016 007 733
- DE-T2- 69 110 525
- DE-T2- 69 933 093
- DE-T2- 69 933 093
- US-A- 3 085 646
- US-A1- 2017 136 911
- US-A1- 2017 136 911

## Beschreibung

Die Erfindung betrifft ein Verfahren zur Ermittlung einer Positionsinformation eines Kraftfahrzeugs, welches eine induktive Ladeeinrichtung mit wenigstens einer, insbesondere im Bereich eines Fahrzeugbodens angeordneten, Ladespule und einem der Ladespule zugeordneten Messmittel zum Vermessen eines Magnetfeldes aufweist. Daneben betrifft die Erfindung ein Kraftfahrzeug.

Viele Fahrerassistenzfunktionen in modernen Kraftfahrzeugen benötigen eine relativ genaue, die aktuelle Position des Kraftfahrzeugs insbesondere geodätisch beschreibende Positionsinformation. Insbesondere sind hier wenigstens teilweise automatische Fahrzeugführungsfunktionen zur autonomen Führung des Kraftfahrzeugs zu nennen. Für diese ist es äußerst wichtig, beispielsweise genau zu wissen, wo auf einer Straße sich das Kraftfahrzeug befindet. Bekannte Positionsbestimmungssysteme, beispielsweise GNSS (Globale Navigationssatellitensysteme) wie GPS (Global Positioning System), weisen häufig noch Ungenauigkeiten auf, die dazu führen können, dass unklar ist, auf welcher Fahrspur einer mehrspurigen Straße sich das Kraftfahrzeug befindet, und dergleichen. Auch andere bekannte Positionsbestimmungs- beziehungsweise Lokalisierungssysteme von Kraftfahrzeugen weisen diesbezüglich häufig noch Schwächen auf, beispielsweise optische Marker nutzende Positionsbestimmungssysteme, auf Koppelnavigation beruhende Positionsbestimmungssysteme beziehungsweise Kombinationen der bislang genannten Positionsbestimmungssysteme.

Es wurden ferner Kraftfahrzeuge vorgeschlagen, die zum Aufladen einer beispielsweise einem Elektromotor des Kraftfahrzeugs zugeordneten Batterie eine induktive Ladeeinrichtung aufweisen. Eine derartige induktive Ladeeinrichtung weist wenigstens eine Ladespule auf, die zum Energieübertrag mit einer bodenseitigen Induktionseinheit wechselwirkt. Der Ladespule ist dabei meist ein Messmittel zum Messen von Magnetfeldern zugeordnet, welches insbesondere genutzt werden kann, um zwischen der bodenseitigen Induktionseinheit und der Ladespule befindliche, gegebenenfalls entzündliche Gegenstände zu detektieren, die den Ladebetrieb stören und/oder durch Entzündung zu Problemen führen können. Um eine optimale Energieübertragung zum Laden der Batterie des Kraftfahrzeugs zu erreichen, ist auch hier im Übrigen eine möglichst genaue Positionierung des Kraftfahrzeugs zu der bodenseitigen Induktionseinheit sinnvoll, wozu beispielsweise funkbasierte Lokalisierungsverfahren und/oder optische Marker nutzende Lokalisierungsverfahren vorgeschlagen wurden.

EP 0 067 337 B1 betrifft die Anordnung einer Magnetfeldsonde an einem Fahrzeug, die die Horizontalkomponenten des Erdmagnetfeldes am jeweiligen Standort bestimmen soll. Dort wird vorgeschlagen, die Sonde unmittelbar an einer ferromagnetischen Außenwand der Karosserie anzubringen und mit dieser starr zu verbinden, um Wechselwirkungen mit der ferromagnetischen Karosserie zu vermindern.

US 2017/0136911 A1 offenbart ein Kraftfahrzeug, das eine induktive Ladeeinrichtung mit wenigstens einer im Bereich eines Fahrzeugbodens angeordneten Ladespule aufweist.

EP 2 416 303 A2 offenbart ein Verfahren, in dem ein Kraftfahrzeug magnetische Sensoren gebraucht, um magnetische Partikel enthaltende weiße Straßenmarkierungen zu detektieren, wobei die Positionsbestimmung des Kraftfahrzeugs verbessert wird.

DE 699 33 093 T offenbart ein Magnetisierungsmethode für eine Straßenmarkierung, wobei individuelle Straßenmarkierungen einer Markierungsgruppe magnetisiert werden, zur Kommunikation bestimmter Straßeninformationen (zum Beispiel einen Zustand, eine Form bzw. ein Verlauf einer Straße) an ein Fahrzeug.

DE 10 2016 007 733 A1 offenbart ein Verfahren zum automatischen Folgen einer Fahrspur, wobei RFID-Chips, die Informationen über einen weiteren Verlauf der Fahrstrecke speichern, welche von einem Kraftfahrzeug ausgelesen werden.

Zur Ermittlung von Positionsinformationen eines Kraftfahrzeugs mittels magnetischer Strukturen wird zudem auf DE 33 07 123 C2, US 4 529 982 A, JP H09 - 292 236 A und JP 2001 - 325691 A verwiesen.

Der Erfindung liegt die Aufgabe zugrunde, eine Möglichkeit zur hochgenauen, insbesondere für eine vollständig automatische Führung des Kraftfahrzeugs nutzbaren Positionsbestimmung des Kraftfahrzeugs anzugeben.

Zur Lösung dieser Aufgabe weist ein Verfahren der eingangs genannten Art erfindungsgemäß folgende Schritte auf:
- durch Bestromung der Ladespule Magnetisierung wenigstens einer in oder auf einem vom Kraftfahrzeug befahrenen Untergrund angeordneten magnetischen Struktur, wobei die Struktur und weitere Strukturen gemeinsam mit einer Positionsangabe der jeweiligen Struktur in einer digitalen Karte gespeichert sind,
- Messung von das Magnetverhalten der Struktur beschreibenden Messdaten mit dem Messmittel,
- Identifikation der Struktur durch Auswertung der Messdaten und Ermittlung der Positionsinformation in Abhängigkeit der der identifizierten Struktur zugeordneten Positionsangabe.

Erfindungsgemäß wird also eine verbesserte Fahrzeugpositionsbestimmung mittels aktiver Erfassung von als Positionsmarkern wirkenden Strukturen vorgeschlagen. Mittels hin heutigen und zukünftigen Kraftfahrzeugen verbauten induktiven Ladeeinrichtungen, konkret den darin vorgesehenen Ladespulen wird eine in den befahrenen Boden eingelassene beziehungsweise auf diesem angeordnete magnetische Struktur, beispielsweise ein ferromagnetisches Material, bestimmter Geometrie und/oder Fläche und/oder Maße magnetisiert, welche Magnetisierung durch eine Verstimmung des Magnetfeldes beziehungsweise durch eine Änderung des Magnetfeldes detektiert werden kann. Die bodenseitig vorgesehenen Strukturen werden dabei in einer digitalen Karte hinterlegt, so dass nach Identifikation der Struktur aufgrund der Messdaten eine entsprechende Positionsinformation bestimmt werden kann.

Die vorgeschlagene aktive Messung bringt mithin ein Magnetfeld ein, welches durch die Struktur modifiziert beziehungsweise beeinflusst wird, wobei sich die Strukturen in ihrem Magnetverhalten hinreichend unterscheiden, dass eine Identifikation wenigstens in einem Eindeutigkeitsbereich um die Struktur möglich ist. Ein derartiges unterschiedliches Magnetverhalten kann durch eine Variation der Geometrie der Strukturen, worauf im Folgenden noch näher eingegangen wird, erreicht werden.

Dabei sei bereits an dieser Stelle angemerkt, dass verschiedenste Ausgestaltungen hinsichtlich der aktiven Magnetisierungsmessung und der tatsächlich aufgenommenen Messdaten denkbar sind. So ist beispielsweise eine Ausgestaltung möglich, in der eine Struktur aus einem ferromagnetischen Material verwendet wird, die durch die aktive Bestromung der Ladespule magnetisiert wird, wonach die entstandene (dauerhafte) Magnetisierung mit dem Messmittel vermessen wird. Andere Ausgestaltungen sehen vor, den Einfluss der magnetischen Struktur, welche auch paramagnetisch oder diamagnetisch sein kann, auf den Aufbau beziehungsweise die Struktur des durch die Bestromung der Ladespule erzeugten Magnetfeldes mittels der Messdaten zu beschreiben. In diesem Zusammenhang bietet es sich insbesondere an, auch die Ladespule selbst als Messmittel zu verwenden, indem aufgrund der magnetischen Struktur auftretende Verluste als Teil der Messdaten aufgezeichnet werden. Mit besonderem Vorteil umfassen die Messdaten jedoch in beiden Fällen ortsaufgelöste Informationen zur Stärke und/oder Richtung eines Magnetfeldes, sei es ein von dem ferromagnetischen Material ausgehendes Magnetfeld und/oder ein durch die Ladespule erzeugtes Magnetfeld, welches aufgrund der Anwesenheit der magnetischen Struktur, insbesondere durch induzierte Wirbelströme modifiziert wird.

In diesem Kontext ist es im übrigen besonders vorteilhaft, wenn ein mehrere, insbesondere in einem Array angeordnete, Magnetfeldsensoren umfassendes Messmittel verwendet wird. Während derartige Messmittel, die Ladespulen zugeordnet sind, bereits grundsätzlich bekannt sind, um beispielsweise Gegenstände zwischen der Ladespule und einer bodenseitigen Induktionseinheit zu detektieren, werden diese Messmittel nun einem weiteren, äußerst vorteilhaften Zweck zugeführt, nämlich einer deutlich verbesserten Positionsbestimmung des Kraftfahrzeugs.

Zur Auswertung der Messdaten, um eine aufgrund einer entsprechenden Beeinflussung beziehungsweise Erzeugung eines Magnetfeldes detektierbare Struktur identifizieren zu können, sind zwei grundsätzliche Möglichkeiten denkbar, die selbstverständlich auch gemeinsam angewendet werden können. So ist es zunächst möglich, dass jeder in der digitalen Karte gespeicherten Struktur wenigstens ein das Magnetverhalten der Struktur beschreibender, die Struktur von anderen Strukturen unterscheidender Strukturparameter zugeordnet und mit dieser gespeichert ist, wobei die Struktur durch Vergleich von einem aus den Messdaten abgeleiteten, dem Strukturparameter entsprechenden Messparameter mit dem in der digitalen Karte gespeicherten Strukturparameter identifiziert wird. In diesem Fall werden mithin durch Berechnung und/oder Simulation die Messdaten dahingehend ausgewertet, Messparameter zu ermitteln, die in der digitalen Karte den Strukturen zugeordnet gespeicherten Strukturparametern entsprechen, so dass durch einen Vergleich die Struktur aufgefunden werden kann, welche in ihren Strukturparametern mit den Messparametern übereinstimmt, so dass eine Identifikation der Struktur ermöglicht wurde.

Möglich ist es zusätzlich oder alternativ jedoch auch, dass die Identifikation der Struktur durch Anwendung eines durch Maschinenlernen trainierten Klassifikators der künstlichen Intelligenz erfolgt. Insbesondere dann, wenn die Abbildung von Eigenschaften, die das Magnetverhalten betreffen, der Strukturen auf aus den Messdaten ermittelbare Messparameter schwierig hinreichend exakt durchführbar ist, bietet es sich an, entsprechende Zusammenhänge beziehungsweise Muster durch künstliche Intelligenz im Rahmen eines Maschinenlernens herzuleiten. Als Trainingsdaten können hierbei insbesondere Messdaten bekannter Strukturen, zu denen eine Grundwahrheit (also die überfahrene Struktur beziehungsweise deren Strukturparameter) bereits bekannt ist, herangezogen werden. Gerade dann, wenn sich Zusammenhänge zwischen dem insbesondere durch die Geometrie der Struktur bestimmten Magnetverhalten der Struktur und mit dem Messmittel aufgenommenen Messdaten nicht unmittelbar ergeben, ist die künstliche Intelligenz, insbesondere im Rahmen von "Deep Learning"-Techniken, hervorragend geeignet, diese Zusammenhänge aufzufinden und nutzbar zu gestalten.

In einer vorteilhaften Weiterbildung der vorliegenden Erfindung kann vorgesehen sein, dass jede Struktur, insbesondere durch den wenigstens einen Strukturparameter, wenigstens innerhalb eines Eindeutigkeitsbereichs um die Struktur eindeutig identifizierbar ist. Dies ist immer dann nützlich, wenn zum einen eine weitere (Positions-) Information vorliegt, die den Suchbereich zur Identifikation der Struktur innerhalb der digitalen Karte einschränken kann, so dass dann eine geringere Anzahl von unterschiedlichen Strukturen insgesamt verwendet werden muss, zum anderen aber auch in Fällen, in denen die gesuchte Positionsinformation sich ohnehin auf eine lokale, dann nicht zwangsläufig geodätische Eigenschaft bezieht. Beispielsweise kann der Eindeutigkeitsbereich die Querrichtung einer befahrenen Straße sein, so dass beispielsweise verschiedene Fahrspuren einer Straße in Querrichtung mit unterscheidbaren Strukturen versehen werden können, so dass die Identifikation der Struktur zur Positionsinformation einer Fahrspurzuordnung führt. Beispielsweise können in Querrichtung einer Straße Strukturen unterschiedlicher geometrischer Außenform, beispielsweise Dreieck, Kreis, Quadrat und dergleichen, in die befahrene Straße eingelassen werden, so dass bei Überfahren durch das Kraftfahrzeug Messdaten entstehen, die eine Identifikation dieser speziellen Struktur und somit eine Fahrspurzuordnung erlauben.

Eine besonders vorteilhafte Ausgestaltung der vorliegenden Erfindung ist gegeben, wenn zunächst eine Grobinformation zur Position des Kraftfahrzeugs, insbesondere durch eine GNSS-Messung, ermittelt wird, wobei der Vergleich auf einen durch die Grobinformation innerhalb der digitalen Karte definierten Suchbereich eingeschränkt wird. Bei der bevorzugten Verwendung von Eindeutigkeitsbereichen, wie beschrieben, wird der Suchbereich immer gleich oder kleiner dem kleinsten betroffenen Eindeutigkeitsbereich gewählt. Auf diese Art und Weise wird mithin eine GNSS-Messung, insbesondere eine GPS-Messung, genutzt, um den Suchbereich innerhalb der digitalen Karte einzuschränken und somit eine schnellere, robustere Identifikation der detektierten Struktur zu erlauben. Eine weniger genaue GNSS-Information kann mithin die Grundlage für eine hochgenaue Positionsbestimmung aufgrund einer aktiven Magnetisierungsmessung erlauben. In dieser Ausgestaltung weißt das Kraftfahrzeug bevorzugt einen entsprechenden GNSS-Sensor auf.

Wie bereits erwähnt, kann vorgesehen sein, dass das unterschiedliche Magnetverhalten unterscheidbarer Strukturen durch eine Geometrie, insbesondere eine Fläche und/oder Abmessungen und/oder eine Form, der Struktur hervorgerufen wird. Dabei sei darauf hingewiesen, dass unterschiedliches Magnetverhalten selbstverständlich auch auf andere Art und Weise grundsätzlich erzeugt werden kann, beispielsweise durch Verwendung unterschiedlicher Materialien und dergleichen. Bevorzugt ist es jedoch, wenn unterschiedliche Strukturen sich wenigstens in ihrer Geometrie unterscheiden. Unterschiede in der Geometrie können sich durch unterschiedliche Flächen/Abmessungen, mithin Größen, genauso ergeben wie durch unterschiedliche Formen, wobei beispielsweise dreieckige, quadratische, runde und weitere Formen im Rahmen der vorliegenden Erfindung eingesetzt werden können. Alle diesen unterschiedlichen Geometrien, die im Übrigen leicht durch Strukturparameter beschreibbar sind, haben unterschiedliche Auswirkungen auf die aktive Magnetfeldmessung zur Folge, da Magnetfelder unterschiedlich erzeugt/beeinflusst werden.

Alternativ zu dediziert vorgesehenen magnetischen Strukturen in/oder auf dem befahrenen Untergrund können auch bereits für andere Zwecke vorgesehene magnetische Strukturen, die detektierbar sind, durch das erfindungsgemäße Verfahren genutzt werden. So kann beispielsweise vorgesehen sein, dass wenigstens eine in den Untergrund eingelassene Messschleife zur Detektion der Anwesenheit und/oder des Passierens von Kraftfahrzeugen als Struktur verwendet wird. Derartige Induktionsschleifen, die die Anwesenheit und/oder die Vorbeifahrt von Kraftfahrzeugen vermessen sollen, sind beispielsweise von Ampeln bekannt. Wie die Induktionsschleife das Kraftfahrzeug detektieren kann, ist es selbstverständlich umgekehrt auch möglich, durch das Kraftfahrzeug die Schleife zu detektieren, so dass diese mithin als Struktur im Rahmen des erfindungsgemäßen Verfahrens dienen kann. Auch andere, in beispielsweise eine Straße eingelassene magnetisierbare Elemente können selbstverständlich zur Positionsbestimmung im Rahmen der vorliegenden Erfindung genutzt werden.

Wie bereits erwähnt, kann die Positionsinformation insbesondere eine befahrene Fahrspur einer Straße umfassen. Insbesondere lässt sich eine besonders einfache Umsetzung des erfindungsgemäßen Verfahrens zur Ermittlung einer befahrenen Fahrspur einer Straße dann erreichen, wenn ein Eindeutigkeitsbereich in Querrichtung gegeben ist und unterschiedliche Geometrien der Strukturen verwendet werden, die insbesondere fest bestimmten Fahrspuren zugeordnet sein können.

Mit besonderem Vorteil kann die Positionsinformation bei der vollständig automatischen Führung des Kraftfahrzeugs verwendet werden. Das Kraftfahrzeug kann mithin ein zur vollständig automatischen Führung des Kraftfahrzeugs ausgebildetes Fahrzeugsystem aufweisen. Die hochgenaue Lokalisierung des Kraftfahrzeugs ist eine der essentiellen Voraussetzungen für die erfolgreiche Implementierung von autonomen Fahrmanövern, so dass die erfindungsgemäß hochgenau bestimmte Positionsinformation hier einen nützlichen, einfach bestimmbaren und robusten Eingabewert liefert.

Neben dem Verfahren betrifft die Erfindung auch ein Kraftfahrzeug, aufweisend eine induktive Ladeeinrichtung mit wenigstens einer, insbesondere im Bereich eines Fahrzeugbodens angeordneten, Ladespule und einem der Ladespule zugeordneten Messmittel zum Vermessen eines Magnetfeldes und eine zur Durchführung eines erfindungsgemäßen Verfahrens ausgebildete Steuereinrichtung. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug auf einer befahrenen Straße,
- Fig. 2: die Anordnung von magnetischen Strukturen innerhalb einer Straße bei der Fahrspurbestimmung, und
- Fig. 3: eine Skizze zur Erläuterung eines Ausführungsbeispiels des erfindungsgemäßen Verfahrens.

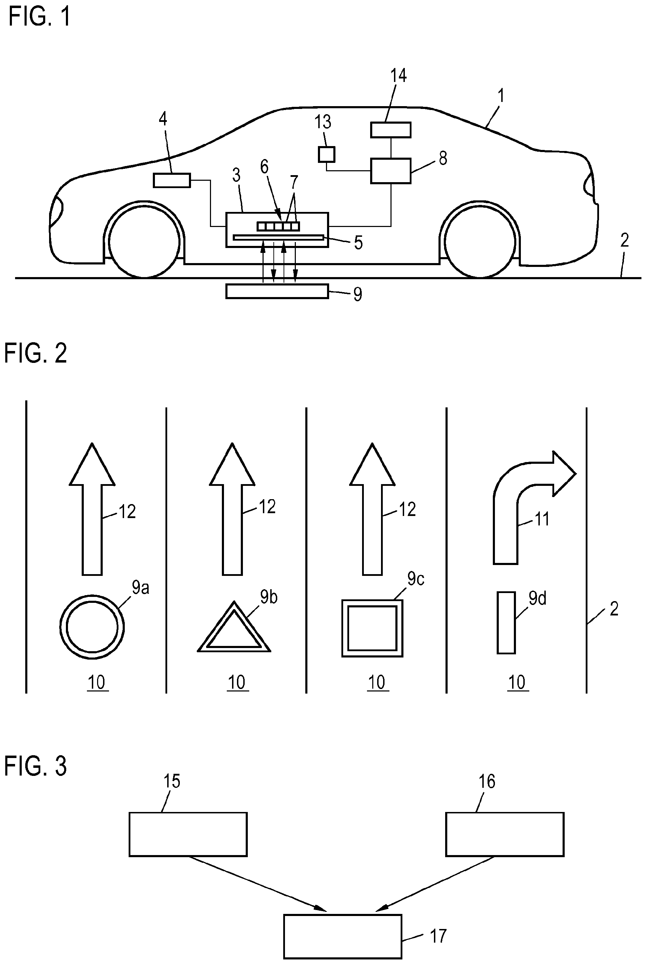

Fig. 1 zeigt eine Prinzipskizze eines erfindungsgemäßen Kraftfahrzeugs 1 auf einer Straße 2. Das Kraftfahrzeug 1 weist eine induktive Ladeeinrichtung 3 zum induktiven Laden einer elektrischen Batterie 4, die einem Elektromotor des Kraftfahrzeugs zugeordnet sein kann, auf. Die Ladeeinrichtung 3 umfasst eine Ladespule 5, die mit einer bodenseitigen Induktionseinheit zur Energieübertragung zusammenwirken kann. Der Ladespule ist ein Messmittel 6 zugeordnet, welches vorliegend ein Array aus mehreren Magnetfeldsensoren 7 umfasst. Beim Ladebetrieb der induktiven Ladeeinrichtung 3 dient das Messmittel 6 insbesondere zur Detektion von zwischen der Ladespule 5 und der bodenseitigen Induktionseinheit befindlichen Gegenständen.

Das Messmittel 6 und die Ladespule 5 können vorliegend jedoch auch durch ein Steuergerät 8 des Kraftfahrzeugs 1 angesteuert werden, welches zur Durchführung des erfindungsgemäßen Verfahrens ausgebildet ist. Mittels des Steuergerätes 8 ist eine Bestromung der Ladespule 5 möglich, um aufgrund des Magnetverhaltens magnetische Strukturen 9, die vorliegend im befahrenen Untergrund, hier der Straße 2, eingelassen sind, zu detektieren. Mit anderen Worten "verstimmen" anwesende Strukturen 9 das Magnetfeld der Ladespule 5, was wiederum mittels des Messmittels 6 in entsprechenden Messdaten erfasst werden kann. Die Messdaten 6 werden im hier dargestellten Ausführungsbeispiel der Steuereinrichtung 8 zugeführt, um dort zur Identifikation einer detektierten Struktur 9 ausgewertet zu werden. Hierzu sind zwei auch kumulativ einsetzbare Möglichkeiten denkbar. Zum einen ist es möglich, aus den Messdaten Messparameter abzuleiten, die in einer digitalen Karte, die die Struktur 9 nebst Positionsangaben enthält, mit den Strukturen 9 zugeordnet gespeicherten Strukturparametern verglichen werden, wobei die Struktur 9 als die der besten Übereinstimmung der Messparameter mit den Strukturparametern bestimmt werden kann. Die Strukturparameter beschreiben vorliegend das Magnetverhalten der jeweiligen Struktur 9, welches in diesem Ausführungsbeispiel durch unterschiedliche Geometrien der Strukturen 9 unterschiedlich für unterschiedliche Strukturen 9 gestaltet wird. Die Geometrie einer Struktur 9 kann dabei neben ihrer Form auch ihre horizontale Fläche und/oder ihre Maße, insgesamt also ihre Größe, umfassen. Nicht alle Strukturen 9 müssen zwangsläufig als Positionsmarke gezielt vorgesehen werden, sondern es ist denkbar, bereits vorliegende Strukturen 9 als Positionsmarker zu verwenden, beispielsweise in den Untergrund eingelassene Schleifen zur Detektion anwesender und/oder vorbeifahrender Kraftfahrzeuge.

Innerhalb der digitalen Karte sind Strukturen 9 innerhalb von Eindeutigkeitsbereichen unterschiedlich, das bedeutet, innerhalb eines Eindeutigkeitsbereichs um jede Struktur 9 ist diese Struktur 9 hinsichtlich ihres Magnetverhaltens einmalig. Ein Beispiel mit einer speziellen Ausgestaltung, bei der es um die Ermittlung einer die befahrene Fahrspur anzeigenden Positionsinformation geht, illustriert Fig. 2. Gezeigt ist dort die Straße 2, welche vorliegend vier Fahrspuren 10 aufweist. Dabei ist die ganz rechte Fahrspur 10, wie der Pfeil 11 anzeigt, für Rechtsabbieger vorgesehen, die weiteren drei Fahrspuren, wie der Pfeil 12 anzeigt, für Geradeausfahrer. In jeder dieser Fahrspuren 10 ist nun eine jeweilige, unterschiedliche magnetische Struktur 9a, 9b, 9c und 9d eingelassen, welche vorliegend unterschiedliche geometrische Formen aufweisen und somit ein unterschiedliches Magnetverhalten zeigen. Die Strukturen 9a bis 9d können dabei aus ferromagnetischen, paramagnetischen oder diamagnetischen Materialien bestehen.

Ein entsprechender Eindeutigkeitsbereich kann hier als Querrichtung zur Straße 2 definiert werden, da in dieser Richtung die Strukturen 9a bis 9d unterschiedlich sind und mithin eine eindeutige Spurzuordnung erlauben.

Das erfindungsgemäße Vorgehen kann jedoch auch in bevorzugter Weise zur geodätischen Positionsbestimmung verwendet werden, das bedeutet, Strukturen 9, 9a-9d sind geodätischen Positionsangaben zugeordnet und sie sind in einem geodätisch definierten Eindeutigkeitsbereich klar identifizierbar.

In diesem Fall weist das Kraftfahrzeug 1, vergleiche Fig. 1, auch einen GNSS-Sensor 13 auf, der eine aufgrund eines globalen Navigationssatellitensystems, beispielsweise GPS, bestimmte Grobinformation zur aktuellen Position des Kraftfahrzeugs 1 liefert. Diese Grobinformation wird genutzt, um einen Suchbereich innerhalb der digitalen Karte zu definieren, welcher nicht größer als jeweilige Eindeutigkeitsbereiche sein sollte. Wird nun eine Struktur 9, 9a-9d, überfahren, lässt sich diese aufgrund der Messdaten des Messmittels 6 identifizieren und es kann aufgrund der zugeordneten Positionsangabe eine hochgenaue Positionsinformation des Kraftfahrzeugs 1 bestimmt werden, welche beispielsweise einem Fahrzeugsystem 14 zur vollständig automatischen Führung des Kraftfahrzeugs 1 oder aber sonstigen Fahrzeugsystemen bereitgestellt werden kann.

Dieses Konzept wird durch Fig. 3 nochmals kurz schematisch erläutert. Gezeigt sind die Grobinformation 15 und die aufgrund der aktiven Magnetisierungsmessung gemessenen Messdaten 16, die durch die entsprechende Auswertung seitens der Steuereinrichtung 8 zu einer hochgenauen Positionsinformation 17 zusammengeführt werden.

## Patentansprüche

1. Verfahren zur Ermittlung einer Positionsinformation (17) eines Kraftfahrzeugs (1), welches eine induktive Ladeeinrichtung (3) mit wenigstens einer, insbesondere im Bereich eines Fahrzeugbodens angeordneten, Ladespule (5) und einem der Ladespule (5) zugeordnetem Messmittel (6) zum Vermessen eines Magnetfeldes aufweist, aufweisend folgende Schritte:
- durch Bestromung der Ladespule (5) Magnetisierung wenigstens einer in oder auf einem vom Kraftfahrzeug (1) befahrenen Untergrund angeordneten magnetischen Struktur (9, 9a-9d), wobei die Struktur (9, 9a-9d) und weitere Strukturen (9, 9a-9d) gemeinsam mit einer Positionsangabe der jeweiligen Struktur (9, 9a-9d) in einer digitalen Karte gespeichert ist,
- Messung von das Magnetverhalten der Struktur (9, 9a-9d) beschreibenden Messdaten (16) mit dem Messmittel (6),
- Identifikation der Struktur (9, 9a-9d) durch Auswertung der Messdaten (16) und Ermittlung der Positionsinformation (17) in Abhängigkeit der der identifizierten Struktur (9, 9a-9d) zugeordneten Positionsangabe.

2. Verfahren nach Anspruch 1,
**dadurch gekennzeichnet,**
**dass** zu jeder in der digitalen Karte gespeicherten Struktur (9, 9a-9d) wenigstens ein das Magnetverhalten der Struktur (9, 9a-9d) beschreibender, die Struktur (9, 9a-9d) von anderen Strukturen (9, 9a-9d) unterscheidender Strukturparameter gespeichert ist, wobei die Struktur (9, 9a-9d) durch Vergleich von einem aus den Messdaten (16) abgeleiteten, dem Strukturparameter entsprechenden Messparameter mit dem in der digitalen Karte gespeicherten Strukturparameter identifiziert wird.

3. Verfahren nach Anspruch 1 oder 2,
**dadurch gekennzeichnet,**
**dass** die Identifikation der Struktur (9, 9a-9d) durch Anwendung eines durch Maschinenlernen trainierten Klassifikators einer künstlichen Intelligenz erfolgt.

4. Verfahren nach einem der vorangehenden Ansprüche,
**dadurch gekennzeichnet,**
**dass** jede Struktur (9, 9a-9d), insbesondere durch den wenigstens einen Strukturparameter, wenigstens innerhalb eines Eindeutigkeitsbereichs um die Struktur (9, 9a-9d) eindeutig identifizierbar ist.

5. Verfahren nach einem der vorangehenden Ansprüche,
**dadurch gekennzeichnet,**
**dass** zunächst eine Grobinformation (15) zur Position des Kraftfahrzeugs (1), insbesondere durch eine GNSS-Messung, ermittelt wird, wobei der Vergleich auf einen durch die Grobinformation (15) innerhalb der digitalen Karte definierten Suchbereich eingeschränkt wird.

6. Verfahren nach einem der vorangehenden Ansprüche,
**dadurch gekennzeichnet,**
**dass** das unterschiedliche Magnetverhalten unterscheidbarer Strukturen (9, 9a-9d) durch eine Geometrie, insbesondere eine Fläche und/oder Abmessungen und/oder eine Form, der Struktur (9, 9a-9d) hervorgerufen wird.

7. Verfahren nach Anspruch 6,
**dadurch gekennzeichnet,**
**dass** unterschiedliche Strukturen (9, 9a-9d) sich wenigstens in ihrer Geometrie unterscheiden.

8. Verfahren nach einem der vorangehenden Ansprüche,
**dadurch gekennzeichnet,**
**dass** wenigstens eine in den Untergrund eingelassene Messschleife zur Detektion der Anwesenheit und/oder des Passierens von Kraftfahrzeugen als Struktur (9, 9a-9d) verwendet wird.

9. Verfahren nach einem der vorangehenden Ansprüche,
**dadurch gekennzeichnet,**
**dass** die Positionsinformation (17) eine befahrene Fahrspur (10) einer Straße (2) umfasst.

10. Verfahren nach einem der vorangehenden Ansprüche,
**dadurch gekennzeichnet,**
**dass** ein mehrere, insbesondere in einem Array angeordnete, Magnetfeldsensoren (7) umfassendes Messmittel (6) verwendet wird.

11. Verfahren nach einem der vorangehenden Ansprüche,
**dadurch gekennzeichnet,**
**dass** die Positionsinformation (17) bei der vollständig automatischen Führung des Kraftfahrzeugs (1) verwendet wird.

12. Kraftfahrzeug (1), aufweisend eine induktive Ladeeinrichtung (3) mit wenigstens einer, insbesondere im Bereich eines Fahrzeugbodens angeordneten, Ladespule (5) und einem der Ladespule (5) zugeordnetem Messmittel (6) zum Vermessen eines Magnetfeldes und eine zur Durchführung eines Verfahrens nach einem der vorangehenden Ansprüche ausgebildete Steuereinrichtung (8).

## Claims

1. Method for determining position information (17) of a motor vehicle (1), which has an inductive charging device (3) with at least one charging coil (5), which is in particular arranged in the region of a vehicle floor, and a measurement means (6) assigned to the charging coil (5) for measuring a magnetic field, having the following steps:
- magnetising, by supplying current to the charging coil (5), at least one magnetic structure (9, 9a-9d) which is arranged in or on a subsurface on which the motor vehicle (1) drives, wherein the structure (9, 9a-9d) and further structures (9, 9a-9d) are stored together with a position indication for the respective structure (9, 9a-9d) in a digital map,
- measuring, using the measurement means (6), measurement data (16) which describe the magnetic behaviour of the structure (9, 9a-9d),
- identifying the structure (9, 9a-9d) by evaluating the measurement data (16) and determining the position information (17) depending on the position indication assigned to the identified structure (9, 9a-9d).

2. Method according to claim 1,
**characterised in that**,
for each structure (9, 9a-9d) stored in the digital map, at least one structure parameter is stored which describes the magnetic behaviour of the structure (9, 9a-9d) and distinguishes the structure (9, 9a-9d) from other structures (9, 9a-9d), wherein the structure (9, 9a-9d) is identified by comparing a measurement parameter which is derived from the measurement data (16) and corresponds to the structure parameter with the structure parameter stored in the digital map.

3. Method according to claim 1 or 2,
**characterised in that**
the structure (9, 9a-9d) is identified by applying a classifier, which is trained by machine learning, of an artificial intelligence.

4. Method according to any of the preceding claims,
**characterised in that**
each structure (9, 9a-9d) is uniquely identifiable, in particular by the at least one structure parameter, at least within a uniqueness region around the structure (9, 9a-9d).

5. Method according to any of the preceding claims,
**characterised in that**
initially rough information (15) on the position of the motor vehicle (1) is determined, in particular by a GNSS measurement, wherein the comparison is restricted to a search region defined by the rough information (15) within the digital map.

6. Method according to any of the preceding claims,
**characterised in that**
the different magnetic behaviour of distinguishable structures (9, 9a-9d) is caused by a geometry, in particular a surface and/or dimensions and/or a shape, of the structure (9, 9a-9d).

7. Method according to claim 6,
**characterised in that**
different structures (9, 9a-9d) differ at least in their geometry.

8. Method according to any of the preceding claims,
**characterised in that**
at least one measuring loop embedded in the subsurface for detecting the presence and/or passage of motor vehicles is used as a structure (9, 9a-9d).

9. Method according to any of the preceding claims,
**characterised in that**
the position information (17) comprises a travelled lane (10) of a road (2).

10. Method according to any of the preceding claims,
**characterised in that**
a measurement means (6) is used which comprises a plurality of magnetic field sensors (7) arranged in particular in an array.

11. Method according to any of the preceding claims,
**characterised in that**
the position information (17) is used in the completely automatic driving of the motor vehicle (1).

12. Motor vehicle (1), having an inductive charging device (3) with at least one charging coil (5), which is in particular arranged in the region of a vehicle floor, and a measurement means (6) assigned to the charging coil (5) for measuring a magnetic field, and a control device (8) designed to perform a method according to any of the preceding claims.

## Revendications

1. Procédé de détermination d'une information de position (17) d'un véhicule automobile (1) qui présente un dispositif de recharge inductif (3) avec au moins une bobine de recharge (5) agencée en particulier dans la zone d'un plancher de véhicule et un moyen de mesure (6) associé à la bobine de recharge (5) et destiné à mesurer un champ magnétique, présentant les étapes suivantes :
- par passage du courant dans la bobine de recharge (5), magnétisation d'au moins une structure magnétique (9, 9a-9d) agencée dans ou sur un sol sur lequel roule le véhicule automobile (1), laquelle structure (9, 9a-9d) et d'autres structures (9, 9a-9d) sont mémorisées conjointement avec une indication de position de la structure respective (9, 9a-9d) dans une carte numérique,
- mesure de données de mesure (16), décrivant le comportement magnétique de la structure (9, 9a-9d), avec le moyen de mesure (6),
- identification de la structure (9, 9a-9d) par évaluation des données de mesure (16) et détermination de l'information de position (17) en fonction de l'indication de position associée à la structure (9, 9a-9d) identifiée.

2. Procédé selon la revendication 1,
**caractérisé en ce que**
pour chaque structure (9, 9a-9d) mémorisée dans la carte numérique est mémorisé au moins un paramètre de structure décrivant le comportement magnétique de la structure (9, 9a-9d) et distinguant la structure (9, 9a-9d) d'autres structures (9, 9a-9d), laquelle structure (9, 9a-9d) est identifiée par comparaison d'un paramètre de mesure, déduit des données de mesure (16) et correspondant au paramètre de structure, au paramètre de structure mémorisé dans la carte numérique.

3. Procédé selon la revendication 1 ou 2,
**caractérisé en ce que**
l'identification de la structure (9, 9a-9d) s'effectue en utilisant un classificateur, obtenu par apprentissage automatique, d'une intelligence artificielle.

4. Procédé selon l'une quelconque des revendications précédentes,
**caractérisé en ce que**
chaque structure (9, 9a-9d) est identifiable de manière univoque, en particulier par l'au moins un paramètre de structure, au moins à l'intérieur d'un domaine d'univocité autour de la structure (9, 9a-9d).

5. Procédé selon l'une quelconque des revendications précédentes,
**caractérisé en ce que**
une information approximative (15) pour la position du véhicule automobile (1), en particulier par une mesure GNSS, est d'abord déterminée, la comparaison étant alors limitée à une zone de recherche définie par l'information approximative (15) à l'intérieur de la carte numérique.

6. Procédé selon l'une quelconque des revendications précédentes,
**caractérisé en ce que**
le comportement magnétique différent de structures (9, 9a-9d) différenciables est dû à une géométrie, en particulier une surface et/ou des dimensions et/ou une forme, de la structure (9, 9a-9d).

7. Procédé selon la revendication 6,
**caractérisé en ce que**
des structures (9, 9a-9d) différentes se différencient au moins par leur géométrie.

8. Procédé selon l'une quelconque des revendications précédentes,
**caractérisé en ce que**
au moins une boucle de mesure intégrée dans le sol en vue de la détection de la présence et/ou du passage de véhicules automobiles est utilisée comme structure (9, 9a-9d).

9. Procédé selon l'une quelconque des revendications précédentes,
**caractérisé en ce que**
l'information de position (17) comprend une voie de circulation (10), sur laquelle roule le véhicule automobile, d'une route (2).

10. Procédé selon l'une quelconque des revendications précédentes,
**caractérisé en ce que**
un moyen de mesure (6), comprenant plusieurs capteurs de champ magnétique (7) agencés en particulier dans un réseau, est utilisé.

11. Procédé selon l'une quelconque des revendications précédentes,
**caractérisé en ce que**
l'information de position (17) est utilisée lors du guidage complètement automatique du véhicule automobile (1).

12. Véhicule automobile (1), présentant un dispositif de recharge inductif (3), avec au moins une bobine de recharge (5) agencée en particulier dans la zone d'un plancher de véhicule et un moyen de mesure (6) associé à la bobine de recharge (5) et destiné à mesurer un champ magnétique, et un dispositif de commande (8) réalisé pour la mise en œuvre d'un procédé selon l'une quelconque des revendications précédentes.
